(19)

**Europäisches Patentamt**
**European Patent Office**
**Office européen des brevets**

(11) **EP 4 625 212 A1**

(12) **EUROPEAN PATENT APPLICATION**

(43) Date of publication:
**01.10.2025 Bulletin 2025/40**

(21) Application number: **25154368.2**

(22) Date of filing: **28.01.2025**

(51) International Patent Classification (IPC):
**G06F 17/11** (2006.01)    **G06N 5/01** (2023.01)
**G06Q 10/04** (2023.01)

(52) Cooperative Patent Classification (CPC):
**G06N 5/01; G06F 17/11; G06Q 10/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2024 JP 2024051965**

(71) Applicant: **Fujitsu Limited**
**Kawasaki-shi, Kanagawa 211-8588 (JP)**

(72) Inventor: **SUGIMURA, Masahiko**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **DATA PROCESSING PROGRAM, DATA PROCESSING DEVICE, AND DATA PROCESSING METHOD**

(57)    A data processing program for causing a computer to execute a process includes searching for a solution to a combinatorial optimization problem represented by a combination of values of a plurality of state variables by first tabu search in which a tabu tenure in which a value of a state variable whose value has changed is fixed is changed at intervals of a predetermined period, storing a number of the state variable whose value has changed in the predetermined period in a storage unit by the tabu tenure, determining a first tabu tenure in which a value of the state variable is fixed based on a slope of change in the number with respect to change in the tabu tenure, and searching for the solution by second tabu search that uses the determined first tabu tenure.

FIG. 1

EP 4 625 212 A1

**Description**

TECHNICAL FIELD

The embodiments discussed herein are a data processing program, a data processing device, and a data processing method.

BACKGROUND OF INVENTION

Tabu search is one of the methods for searching for a solution to a combinatorial optimization problem. A solution to a combinatorial optimization problem is represented by a combination of the values of a plurality of state variables. In tabu search, out of a plurality of state variables, a state variable whose value has been changed once is fixed for a certain period of time. Consequently, a situation in which a solution falls into the same local solution many times is suppressed, and a search of a wide solution space is achieved. The above period of time in which a state variable is fixed is referred to as a tabu tenure.

Citation List

Patent Document

    International Publication Pamphlet No. WO 2006/118193
    U.S. Patent Application Publication No. 2023/0169353
    U.S. Patent Application Publication No. 2016/0042294

Non-Patent Literature

    Nilgun Fescioglu-Unver, Mieczyslaw M. Kokar, "Self Controlling Tabu Search algorithm for the Quadratic Assignment Problem", Computers & Industrial Engineering, 2011, vol. 60, pp. 310-319
    Roberto Battiti, Giampietro Tecchiolli, "The Reactive Tabu Search", ORSA Journal on Computing, 1994, vol. 6, No. 2, pp. 126-140
    E. Taillard, "Robust taboo search for the quadratic assignment problem", Parallel computing, 1991, vol. 17, pp. 443-455

SUMMARY OF INVENTION

TECHNICAL PROBLEMS

An appropriate tabu tenure varies depending on a problem. Therefore, even when tabu search is performed on different problems using a common tabu tenure determined in advance, there is a possibility that high solution finding performance is not obtained depending on a problem. For this reason, in many cases, a worker has been manually setting a tabu tenure according to a problem. However, since the number of values that may be set as a tabu tenure may be the as the total number of state variables, determination of an appropriate tabu tenure by trial and error takes time.
In one aspect, it is desirable to obtain an appropriate tabu tenure in a short time.

SOLUTION TO PROBLEM

According to an aspect of the embodiments, a data processing program for causing a computer to execute a process includes searching for a solution to a combinatorial optimization problem represented by a combination of values of a plurality of state variables by first tabu search in which a tabu tenure in which a value of a state variable whose value has changed is fixed is changed at intervals of a predetermined period, storing a number of the state variable whose value has changed in the predetermined period in a storage unit by the tabu tenure, determining a first tabu tenure in which a value of the state variable is fixed based on a slope of change in the number with respect to change in the tabu tenure, and searching for the solution by second tabu search that uses the determined first tabu tenure.

EFFECTS OF INVENTION

In one aspect, an appropriate tabu tenure is obtained in a short time.

BRIEF DESCRIPTION OF DRAWINGS

The invention is described, by way of example only, with reference to the following drawings, in which:

FIG. 1 is a diagram illustrating an example of a data processing device according to a first embodiment and a processing procedure thereof;
FIG. 2 is a diagram illustrating a relationship between the number of types of state variables whose value has changed in a predetermined period and the value of evaluation function, with respect to a tabu tenure;
FIG. 3 is a block diagram illustrating a hardware example of a data processing device according to a second embodiment;
FIG. 4 is a block diagram illustrating a function example of the data processing device;
FIGs. 5A and 5B are diagrams illustrating a creation example of a tabu tenure stage list;
FIG. 6 is a flowchart illustrating a first example of the processing procedure of the data processing device;
FIG. 7 is a flowchart illustrating a first example of a processing procedure of tabu tenure adjustment processing;
FIG. 8 is a flowchart illustrating a second example of the processing procedure of the tabu tenure adjustment processing;
FIG. 9 is a flowchart illustrating a second example of the processing procedure of the data processing device;
FIG. 10 is a flowchart illustrating a processing procedure of tabu tenure adjustment processing in the second example;
FIG. 11 is a flowchart illustrating a third example of the processing procedure of the data processing device;
FIG. 12 is a diagram illustrating a result of an evaluation experiment using 18 types of combinatorial optimization problems; and
FIG. 13 is a diagram illustrating another example of the data processing device.

DESCRIPTION OF EMBODIMENTS

Hereinafter, embodiments of the present disclosure will be described with reference to the drawings.

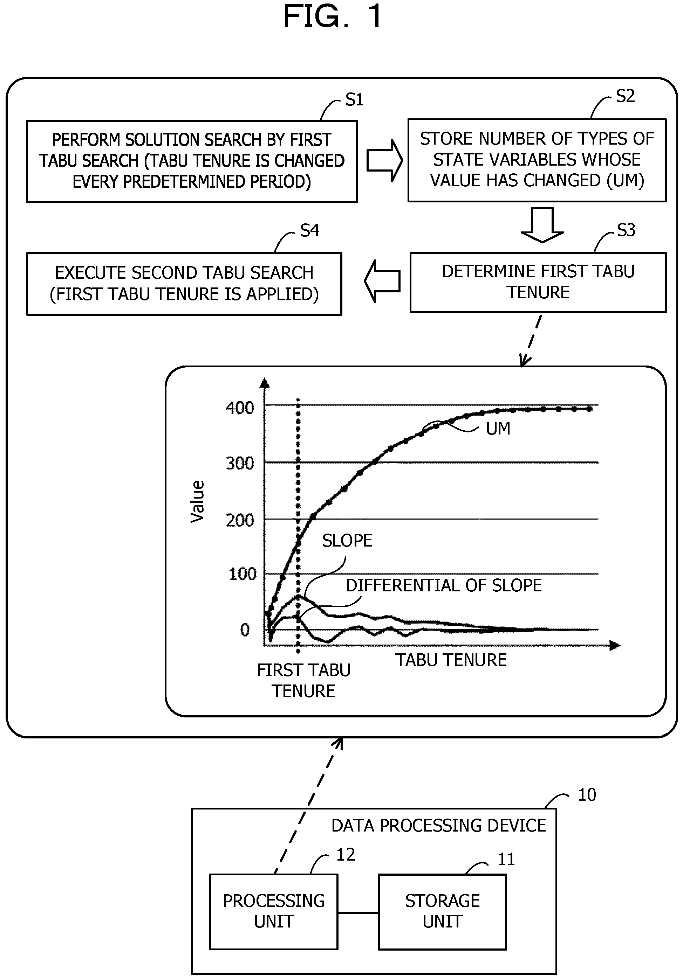

FIG. 1 is a diagram illustrating an example of a data processing device according to a first embodiment and a processing procedure thereof. A data processing device 10 of the first embodiment searches for a solution to a combinatorial optimization problem by tabu search. The data processing device 10 may be a client device or a server device. The data processing device 10 may be referred to as a computer.
The data processing device 10 of the first embodiment includes a storage unit 11 and a processing unit 12.
The storage unit 11 may include a volatile semiconductor memory such as a random-access memory (RAM), or may include a non-volatile storage such as a hard disk drive (HDD) or a flash memory. The storage unit 11 may include both of a volatile semiconductor memory and a non-volatile storage.
The storage unit 11 stores problem information of a combinatorial optimization problem. For example, a combinatorial optimization problem may be replaced with a problem of minimizing (or maximizing) the value of an evaluation function such as that indicated by the following formula (1).

$$E(\boldsymbol{x}) = \sum_{i=1}^{N} \sum_{j=1}^{N} W_{ij} x_i x_j + \sum_{i=1}^{N} b_i x_i \qquad (1)$$

Formula (1) is an evaluation function formulated in a quadratic unconstrained binary optimization (QUBO) format. State vector x includes a plurality of types of state variables ($x_1$ to $x_N$) as elements and indicates a state.
The first term on the right side of formula (1) is obtained by adding up the products of the values of two types of state variables and a weight coefficient without omission or overlap for all combinations of two types of state variables that may be selected from all state variables. Subscripts i and j are indices of state variables. $x_i$ is an i-th state variable. $x_j$ is a j-th state variable. $W_{ij}$ is a weight between the i-th state variable and the j-th state variable or a weight coefficient indicating the strength of coupling. $W_{ij} = W_{ji}$, and $W_{ii} = 0$. N is the total number of state variables.
The second term on the right side of formula (1) is obtained by calculating the sum of the products of the bias of each of all state variables and the value of a state variable. $b_i$ indicates a bias for the i-th state variable. The weight coefficient and bias have values specific to a problem. The problem information of a combinatorial optimization problem stored in the storage unit 11 includes a weight coefficient, bias, and the like included in an evaluation function such as that described above.

The storage unit 11 may store calculation conditions of tabu search. The calculation conditions include an initial value of tabu tenure, a list of a plurality of tabu tenures used when a tabu tenure is changed, and the like. The storage unit 11 may also store a search result of a solution by tabu search.

For example, the processing unit 12 may be realized by an electronic circuit such as an application-specific integrated circuit (ASIC) or a field-programmable gate array (FPGA). However, the processing unit 12 may also be realized by a processor such as a central processing unit (CPU), a graphics processing unit (GPU), or a digital signal processor (DSP). For example, the processor executes a program stored in a memory such as a RAM (which may be the storage unit 11). A set of processors may be referred to as a multiprocessor or simply a "processor". The processing unit 12 may include a processor and an electronic circuit such as an ASIC or FPGA.

The processing unit 12 searches for a solution to a combinatorial optimization problem by tabu search. In tabu search, for example, out of the N types of state variables in formula (1), a state variable whose value has been changed once is fixed for a tabu tenure. Consequently, a situation in which a solution falls into the same local solution many times is suppressed, and a search of a wide solution space is achieved. However, an appropriate tabu tenure varies depending on a problem.

As a result of experiments, the inventor of the present application obtained the following knowledge applicable to many combinatorial optimization problems.

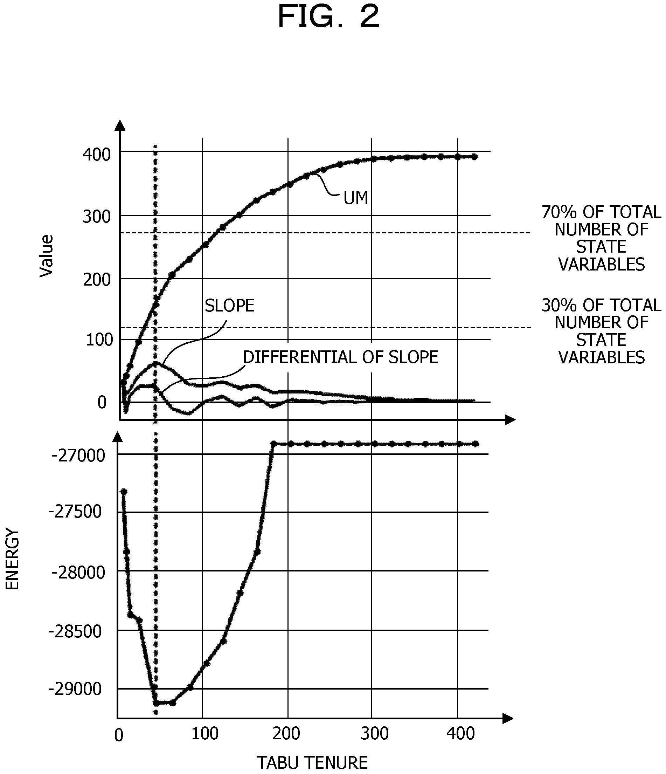

FIG. 2 is a diagram illustrating a relationship between the number of types of state variables whose value has changed in a predetermined period and the value of evaluation function, with respect to a tabu tenure. The number of types of state variables whose value has changed in a predetermined period is hereinafter referred to as unique move (UM). The value of evaluation function is referred to as energy. In FIG. 2, the horizontal axis represents tabu tenure, and the vertical axis represents value of UM, slope of change in UM with respect to change in tabu tenure, differential of slope, and energy. The tabu tenure is represented by the number of steps of tabu search. In the example of FIG. 2, the total number of state variables is 400.

FIG. 2 represents that, as the energy is smaller, a better solution is obtained. As the tabu tenure increases, the value of UM also increases. On the other hand, while the energy decreases with an increase in tabu tenure until the tabu tenure reaches around 40, the energy increases when the tabu tenure exceeds 40. As in FIG. 2, there is a tabu tenure in which the energy is minimum around the tabu tenure in which the slope of the change in UM is maximum.

From this, it is found that an appropriate tabu tenure may be determined based on the above slope. It was found that the range of UM that reaches a good solution is approximately 30% or more and 70% or less of the total number of state variables.

As described above, there is a causal relationship between the three elements of tabu tenure, UM, and solution finding performance (goodness of final solution). For example, in a case where the tabu tenure is 0 or too short, since only the values of some easy-to-move state variables repeatedly change, UM decreases and a search is limited to a narrow range. As a result, solution finding performance is degraded. Conversely, when the tabu tenure is too long, UM increases, but the values of state variables are less likely to change overall, and a case where the same state is repeated increases. As a result, solution finding performance is degraded. In a case where the tabu tenure is equal to or more than the total number of state variables, UM is equal to the total number of state variables, and the operation in which the values of all state variables change in a predetermined order is repeated. Consequently, the same state is repeated, a search does not proceed, and solution finding performance is degraded. In a case where the tabu tenure is appropriate, UM is appropriate, the values of many types of state variables change, and global search and local search are performed in a balanced manner. Consequently, high solution finding performance is obtained.

In order to determine an appropriate tabu tenure such as that described above (hereinafter referred to as a first tabu tenure), the processing unit 12 performs the following processing.

Step S1: The processing unit 12 searches for a solution to a combinatorial optimization problem by first tabu search in which the tabu tenure is changed every predetermined period. For example, the processing unit 12 extends the tabu tenure every predetermined period. In a case where a list of a plurality of tabu tenures is stored in the storage unit 11, the processing unit 12 changes the tabu tenure every predetermined period in accordance with the list.

Step S2: The processing unit 12 stores UM in the storage unit 11 for each tabu tenure.

Step S3: The processing unit 12 determines the first tabu tenure from the tabu tenures based on the slope of the change in UM with respect to the change in tabu tenure. For example, the processing unit 12 calculates a differential of the above slope (second order differential of the change in UM) in order to obtain a tabu tenure in which the slope of the change in UM is maximum, which is the tabu tenure in which the energy is minimum illustrated in FIG. 2. When the differential of the slope changes from positive to negative, the immediately preceding tabu tenure (in which the differential of the slope is positive) is a tabu tenure in which the slope of the change in UM is the largest. The processing unit 12 determines such tabu tenure as the first tabu tenure.

Step S4: The processing unit 12 searches for a solution to a combinatorial optimization problem by second tabu search in which the determined first tabu tenure is used.

In a case where a worker determines an appropriate tabu tenure by trial and error, there has to be a large number of man-hours. However, according to the above data processing device 10, since an appropriate tabu tenure may be automatically determined in the process of a solution search, an appropriate tabu tenure is obtained in a short time. According to the data processing device 10, tabu search (second tabu search) is performed by using the appropriate first tabu tenure in which there is a high possibility that a good solution with smaller energy is obtained. Consequently, solution finding performance of a combinatorial optimization problem by tabu search may be improved.

Such data processing device 10 may be expected to be useful as means for obtaining an accurate solution in a short time when various problems in modern society that may be converted into a combinatorial optimization problem are solved.

(Second Embodiment)

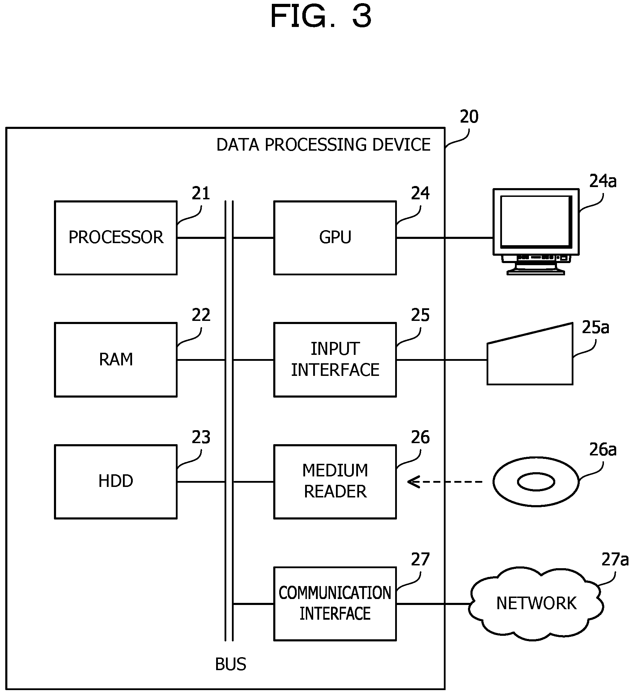

FIG. 3 is a block diagram illustrating a hardware example of a data processing device according to a second embodiment.

For example, a data processing device 20 is a computer, and includes a processor 21, a RAM 22, an HDD 23, a GPU 24, an input interface 25, a medium reader 26, and a communication interface 27. The above units are coupled to a bus.

The processor 21 is a processor such as a GPU or CPU including an arithmetic circuit that executes instructions of a program. The processor 21 loads at least a part of a program or data stored in the HDD 23 into the RAM 22 and executes the program. The processor 21 may include a plurality of processor cores. The data processing device 20 may include a plurality of processors. A set of a plurality of processors (multiprocessor) may be referred to as a "processor".

The RAM 22 is a volatile semiconductor memory that temporarily stores a program to be executed by the processor 21 and data to be used for computation by the processor 21. The data processing device 20 may include a memory of a type other than the RAM 22, and may include a plurality of memories.

The HDD 23 is a non-volatile storage device that stores a program of software such as an operating system (OS), middleware, and application software, and data. For example, the program includes a program that causes the data processing device 20 to execute a process of searching for a solution to a combinatorial optimization problem by tabu search. The data processing device 20 may include another type of storage device such as a flash memory or a solid-state drive (SSD), and may include a plurality of non-volatile storage devices.

The GPU 24 outputs an image to a display 24a coupled to the data processing device 20 in accordance with an instruction from the processor 21. As the display 24a, a cathode ray tube (CRT) display, a liquid crystal display (LCD), a plasma display panel (PDP), an organic electro-luminescence (OEL) display, or the like may be used.

The input interface 25 acquires an input signal from an input device 25a coupled to the data processing device 20, and outputs the input signal to the processor 21. As the input device 25a, a pointing device such as a mouse, a touch panel, a touchpad, or a trackball, a keyboard, a remote controller, a button switch, or the like may be used. A plurality of types of input devices may be coupled to the data processing device 20.

The medium reader 26 is a reading device that reads a program or data recorded on a recording medium 26a. For example, a magnetic disk, an optical disk, a magneto-optical (MO) disk, a semiconductor memory, or the like may be used as the recording medium 26a. The magnetic disk includes a flexible disk (FD) and an HDD. The optical disk includes a compact disc (CD) and a Digital Versatile Disc (DVD).

For example, the medium reader 26 copies a program or data read from the recording medium 26a to another recording medium such as the RAM 22 or the HDD 23. For example, the read program is executed by the processor 21. The recording medium 26a may be a portable type recording medium, and may be used for distribution of a program or data. The recording medium 26a and the HDD 23 may be referred to as a computer-readable recording medium.

The communication interface 27 is an interface that is coupled to a network 27a and that performs communication with another information processing device via the network 27a. The communication interface 27 may be a wired communication interface coupled to a communication device such as a switch by a cable, or may be a wireless communication interface coupled to a base station via a wireless link.

Next, functions of the data processing device 20 will be described.

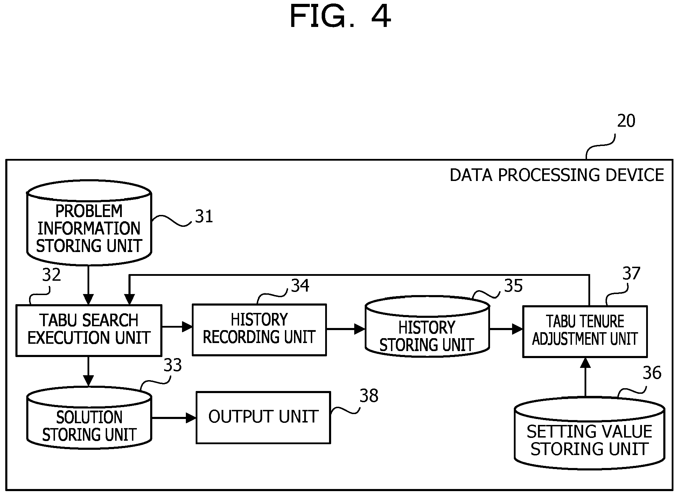

FIG. 4 is a block diagram illustrating a function example of the data processing device.

The data processing device 20 includes a problem information storing unit 31, a tabu search execution unit 32, a solution storing unit 33, a history recording unit 34, a history storing unit 35, a setting value storing unit 36, a tabu tenure adjustment unit 37, and an output unit 38.

With these, functions similar to those of the storage unit 11 and the processing unit 12 illustrated in FIG. 1 are realized.

The problem information storing unit 31, the solution storing unit 33, the history storing unit 35, and the setting value storing unit 36 are implemented by using storage areas secured in the RAM 22 or the HDD 23. For example, the tabu search execution unit 32, the history recording unit 34, the tabu tenure adjustment unit 37, and the output unit 38 may be implemented by using a program module executed by the processor 21 or a storage area (a register or a cache memory) in the processor 21.

The problem information storing unit 31 stores problem information of a combinatorial optimization problem. For example, the problem information includes a weight coefficient, a bias, and the like included in an evaluation function such as that illustrated in formula (1). The problem information may be input by the operation of the input device 25a by a user and stored in the problem information storing unit 31, or may be input via the recording medium 26a or the network 27a and stored in the problem information storing unit 31.

The tabu search execution unit 32 searches for a solution to a combinatorial optimization problem by tabu search.

The solution storing unit 33 stores a solution obtained by tabu search.

The history recording unit 34 acquires, as history information, the number of times of inversion of each state variable during a search by tabu search, and records the history information in the history storing unit 35.

The history storing unit 35 stores history information.

The setting value storing unit 36 stores various setting values, calculation conditions, and the like. For example, a threshold, which will be described later, for determining a timing at which UM is calculated and a tabu tenure is changed, a step size for changing a tabu tenure, and the like are stored as the setting values and calculation conditions. The setting value storing unit 36 may store a tabu tenure stage list used when a tabu tenure is changed. These may be input by the operation of the input device 25a by a user and stored in the setting value storing unit 36, or may be input via the recording medium 26a or the network 27a and stored in the setting value storing unit 36.

The tabu tenure adjustment unit 37 performs adjustment of a tabu tenure.

The output unit 38 outputs a solution of tabu search stored in the solution storing unit 33 as a search result. The search result may include the value of evaluation function (energy) corresponding to the solution. For example, the output unit 38 may output the search result to the display 24a for display, may transmit the search result to another information processing device via the network 27a, or may store the search result in an external storage device.

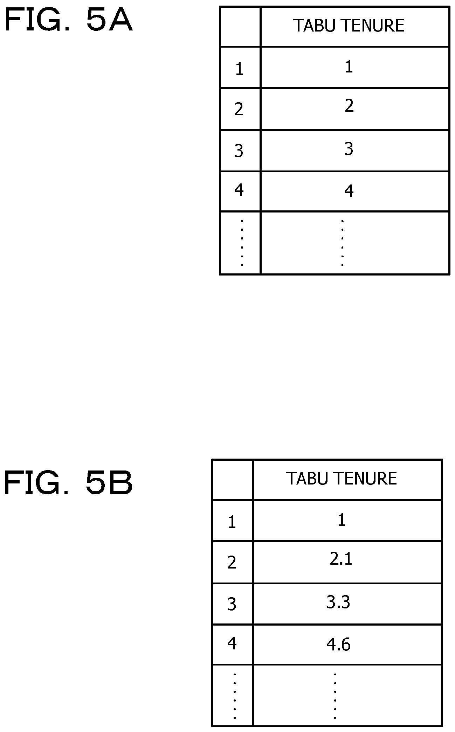

FIGs. 5A and 5B are diagrams illustrating a creation example of a tabu tenure stage list. FIG. 5A is an example of a tabu tenure stage list in which the step size of tabu tenure is fixed. FIG. 5B is an example of a tabu tenure stage list in which the step size of tabu tenure increases as the tabu tenure is longer.

When the step size of tabu tenure is too small, it takes time to adjust the tabu tenure to an appropriate tabu tenure. Conversely, when the step size of tabu tenure is too large, the accuracy of adjusting to an appropriate tabu tenure deteriorates.

As illustrated in FIG. 2 described before, the slope of the change in UM tends to increase in a region where the tabu tenure is short. Consequently, in finding an optimal tabu tenure, an allowable error is larger in a case where the tabu tenure is long than in a case where the tabu tenure is short. By setting the step size of tabu tenure to be larger as the tabu tenure is longer as illustrated in FIG. 5B, both improvement in accuracy and reduction in adjustment time may be expected. In the example of FIG. 5B, the step size of tabu tenure is increased by 10%. In a case where the unit of tabu tenure is the number of steps of tabu search, when the number is set as the tabu tenure of tabu search, the value after the decimal point in FIG. 5B is rounded off.

Next, three examples of a processing procedure of the data processing device 20 will be described.

(Processing Procedure (First Example))

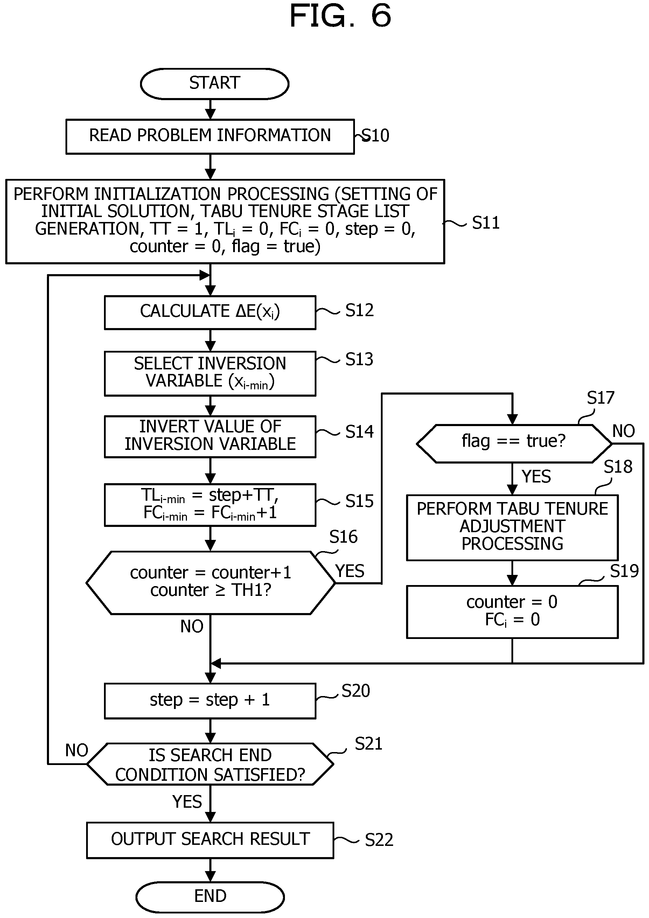

FIG. 6 is a flowchart illustrating a first example of the processing procedure of the data processing device.

Step S10: The tabu search execution unit 32 reads the problem information stored in the problem information storing unit 31.

Step S11: Initialization processing is performed. In the initialization processing, setting of an initial solution and creation of a tabu tenure stage list are performed. TT indicating a tabu tenure is initialized to an initial value of 1. The tabu limit ($TL_i$) and the number of times of inversion ($FC_i$) of each state variable ($x_i$) of $x_1$ to $x_N$ are each initialized to 0. The number of steps of tabu search (step) and the value of a counter (counter) are each initialized to 0. A flag indicating whether adjustment of tabu tenure is executable is initialized to "true" (indicating that the adjustment is executable).

Step S12: The tabu search execution unit 32 calculates, for each of $x_1$ to $x_N$, a change amount of the value of evaluation function ($\Delta E(x_i)$) when the value is inverted.

Step S13: The tabu search execution unit 32 selects, from among $x_i$ satisfying $TL_i \leq$ step, the state variable ($x_i = x_{i\text{-}min}$) that minimizes $\Delta E(x_i)$ as an inversion variable whose value is to be inverted.

Step S14: The tabu search execution unit 32 inverts the value of inversion variable. For example, the tabu search execution unit 32 inverts the value to 1 when the value of inversion variable is 0, and inverts the value to 0 when the value of inversion variable is 1. At this time, the tabu search execution unit 32 updates the energy. When energy lower than the previous minimum energy is obtained, the minimum energy is updated with that energy. The tabu search execution unit 32 holds, as a solution candidate, a state represented by a combination of the values of $x_1$ to $x_N$ obtained when the minimum energy is updated, together with that energy.

Step S15: The tabu search execution unit 32 sets the tabu limit ($TL_{i-min}$) for $x_{i-min}$ to step + TT, and increments the number of times of inversion ($FC_{i-min}$) for $x_{i-min}$ by 1.

Step S16: The tabu tenure adjustment unit 37 sets counter = counter + 1, and then determines whether it is counter $\geq$ TH1. TH1 is a threshold for determining a timing at which UM is calculated and a tabu tenure is changed. For example, TH1 is stored in the setting value storing unit 36.

When the tabu tenure adjustment unit 37 determines that it is counter $\geq$ TH1, the processing of step S17 is performed, and when it is determined that it is not counter $\geq$ TH1, the processing of step S20 is performed.

Step S17: The tabu tenure adjustment unit 37 determines whether the flag is "true". When the tabu tenure adjustment unit 37 determines that the flag is "true", the processing of step S18 is performed, and when it is determined that the flag is not "true", the processing of step S20 is performed.

Step S18: The tabu tenure adjustment unit 37 performs tabu tenure adjustment processing. A procedure of the tabu tenure adjustment processing will be described later.

Step S19: The tabu tenure adjustment unit 37 returns counter and $FC_i$ for all of $x_1$ to $x_N$ to 0.

Step S20: The tabu search execution unit 32 increments step by 1.

Step S21: The tabu search execution unit 32 determines whether a search end condition is satisfied. For example, the tabu search execution unit 32 determines that the search end condition is satisfied in a case where step exceeds a preset value.

When it is determined that the search end condition is satisfied, the processing of step S22 is performed. When it is determined that the search end condition is not satisfied, the processing from step S12 is repeated.

Step S22: For example, the output unit 38 outputs, as a search result, a solution of tabu search stored in the solution storing unit 33. A solution candidate that minimizes energy out of solution candidates obtained by tabu search is stored in the solution storing unit 33 as a solution, together with that energy. The output unit 38 may also output the energy of the solution as the search result.

Hereinafter, two examples of a processing procedure of the tabu tenure adjustment processing by the data processing device 20 will be described.

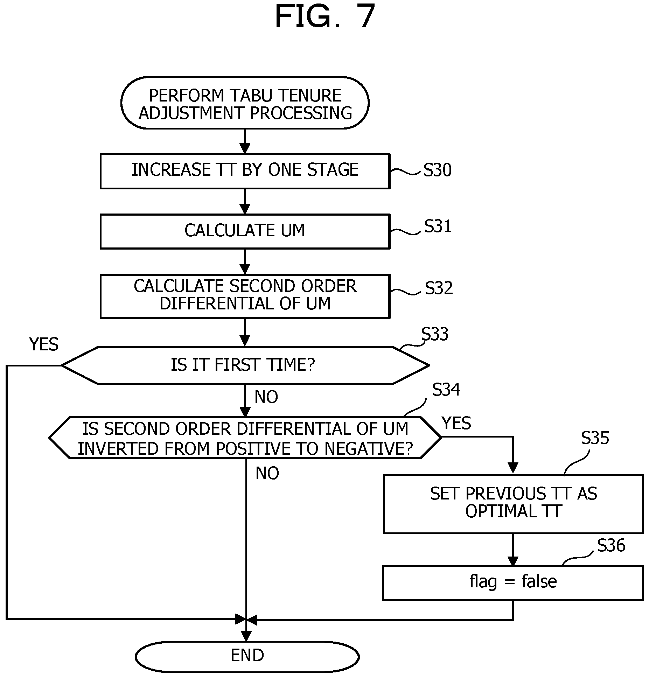

FIG. 7 is a flowchart illustrating a first example of the processing procedure of the tabu tenure adjustment processing.

Step S30: For example, the tabu tenure adjustment unit 37 increases TT indicating a tabu tenure used for tabu search by one stage based on a tabu tenure stage list such as that illustrated in FIGs. 5A and 5B.

Step S31: The tabu tenure adjustment unit 37 calculates UM by aggregating $FC_i$. By obtaining the number of $FC_i$ whose value is 1 or more out of $FC_i$ where i = 1 to N, UM is obtained.

Step S32: The tabu tenure adjustment unit 37 calculates a second order differential of UM. A second order differential of UM indicates a differential of the slope of the change in UM illustrated in FIG. 2.

Step S33: The tabu tenure adjustment unit 37 determines whether it is the first tabu tenure adjustment processing. When it is determined that it is the first tabu tenure adjustment processing, the tabu tenure adjustment unit 37 ends the first tabu tenure adjustment processing. When the tabu tenure adjustment unit 37 determines that it is not the first tabu tenure adjustment processing, the processing of step S34 is performed.

Step S34: The tabu tenure adjustment unit 37 determines whether the second order differential of UM is inverted from positive to negative. When it is determined that the second order differential of UM is inverted from positive to negative, the tabu tenure adjustment unit 37 performs the processing of step S35. When it is determined that the second order differential of UM is not inverted from positive to negative, the tabu tenure adjustment unit 37 ends one time of adjustment processing of tabu tenure.

Step S35: The tabu tenure adjustment unit 37 sets TT used for tabu search in the previous predetermined period (TH1) as the optimal TT (corresponding to the first tabu tenure of the first embodiment).

Step S36: The tabu tenure adjustment unit 37 sets the flag to "false" indicating that the adjustment of tabu tenure is not executed. Consequently, the adjustment of tabu tenure is completed, and subsequent adjustment of tabu tenure is not performed.

As illustrated in FIG. 2, there is a tabu tenure in which the energy is minimum around the tabu tenure in which the slope of the change in UM is maximum. The data processing device 20 calculates a second order differential of UM (differential of the slope of the change in UM) and, when the second order differential changes from positive to negative, determines TT used for tabu search in the previous predetermined period as the optimal TT. The tabu search execution unit 32 performs tabu search using the optimal TT until a search end condition is satisfied.

With the above processing, since the optimal TT may be automatically determined in the process of a solution search, an appropriate tabu tenure is obtained in a short time. Tabu search may be performed by using the optimal TT in which there is a high possibility that a good solution with smaller energy is obtained. Consequently, solution finding performance of a combinatorial optimization problem by tabu search may be improved.

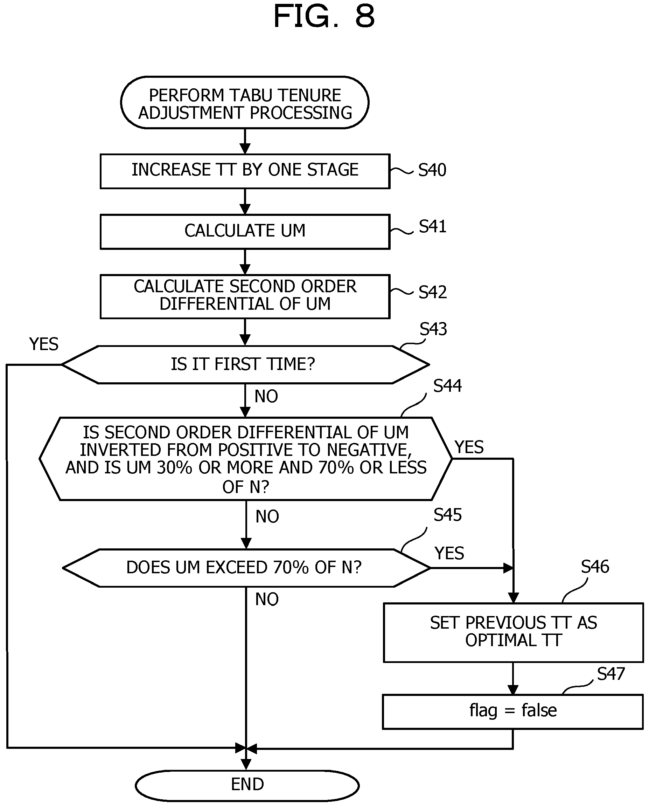

FIG. 8 is a flowchart illustrating a second example of the processing procedure of the tabu tenure adjustment processing.

The processing of steps S40 to S43 is the same as the processing of steps S30 to S33 illustrated in FIG. 7.

Step S44: The tabu tenure adjustment unit 37 determines whether the second order differential of UM is inverted from positive to negative and UM is 30% or more and 70% or less of the total number of state variables (N). When it is determined that the second order differential of UM is inverted from positive to negative and UM is 30% or more and 70% or less of N, the tabu tenure adjustment unit 37 performs the processing of step S46. When it is determined that the second order differential of UM is not inverted from positive to negative or UM is not 30% or more and 70% or less of N, the tabu tenure adjustment unit 37 performs the processing of step S45.

Step S45: The tabu tenure adjustment unit 37 determines whether UM exceeds 70% of N. When it is determined that UM exceeds 70% of N, the tabu tenure adjustment unit 37 performs the processing of step S46. When it is determined that UM does not exceed 70% of N, the tabu tenure adjustment unit 37 ends one time of adjustment processing of tabu tenure.

The processing of steps S46 and S47 is the same as the processing of steps S35 and S36 illustrated in FIG. 7.

As illustrated in FIG. 2, the range of UM that reaches a good solution is roughly the range of 30% or more and 70% or less of N. When the tabu tenure is lengthened, UM increases. From this, when UM exceeds 70% of N, there is a low possibility of obtaining a tabu tenure in which a good solution may be reached even when the tabu tenure is further lengthened. Consequently, by setting the previous TT as the optimal TT and completing the adjustment of TT with the flag being set to "false" when UM exceeds 70% of N as in FIG. 8, useless adjustment processing may be suppressed and the adjustment time may be reduced.

(Processing Procedure (Second Example))

In a second example of the processing procedure of the data processing device 20, a tabu tenure in which the slope of the change in UM is the largest is searched for while the range of tabu tenure is divided into two, instead of sequentially lengthening the tabu tenure.

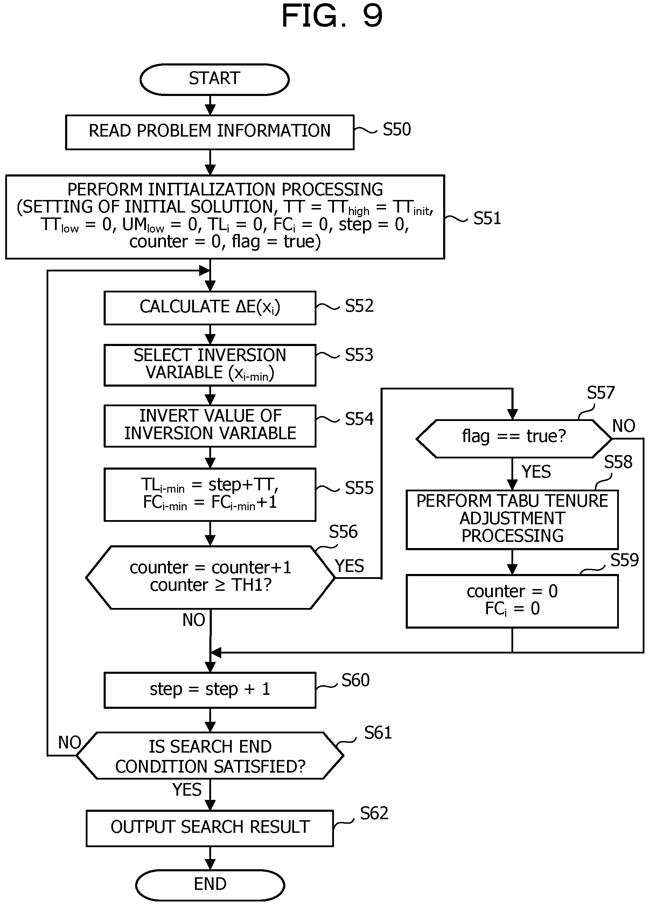

FIG. 9 is a flowchart illustrating the second example of the processing procedure of the data processing device.

Step S50 is the same as the processing of step S10 illustrated in FIG. 6.

Step S51: In the initialization processing in the second example of processing procedure, unlike the case of the first example, the following processing is performed instead of generating a tabu tenure stage list.

$\Pi_{init}$ is set to TT indicating a tabu tenure and $\Pi_{high}$. $\Pi_{high}$ indicates an upper limit value of the range of tabu tenure in which the optimal TT is searched for. $\Pi_{init}$ is a value of 1 or more and N or less. For example, the value of 50% of N is used. 0 is set to $\Pi_{low}$. $\Pi_{low}$ indicates a lower limit value of the range of tabu tenure in which the optimal TT is searched for. 0 is set to $UM_{low}$. $UM_{low}$ is UM when the tabu tenure (TT) is $T_{low}$,

For the rest, initialization processing similar to that in the first example is performed. For example, setting of an initial solution is performed. The tabu limit ($TL_i$), the number of times of inversion ($FC_i$), the number of steps of tabu search (step), and the value of a counter (counter) of each state variable ($x_i$) of $x_1$ to $x_N$ are each initialized to 0. The flag indicating whether adjustment of tabu tenure is executable is initialized to "true" (indicating that the adjustment is executable).

The processing of steps S52 to S57 and S59 to S62 is the same as the processing of steps S12 to S17 and S19 to S22 in the first example illustrated in FIG. 6. Unlike the tabu tenure adjustment processing in the first example, the following processing is performed in the tabu tenure adjustment processing of step S58.

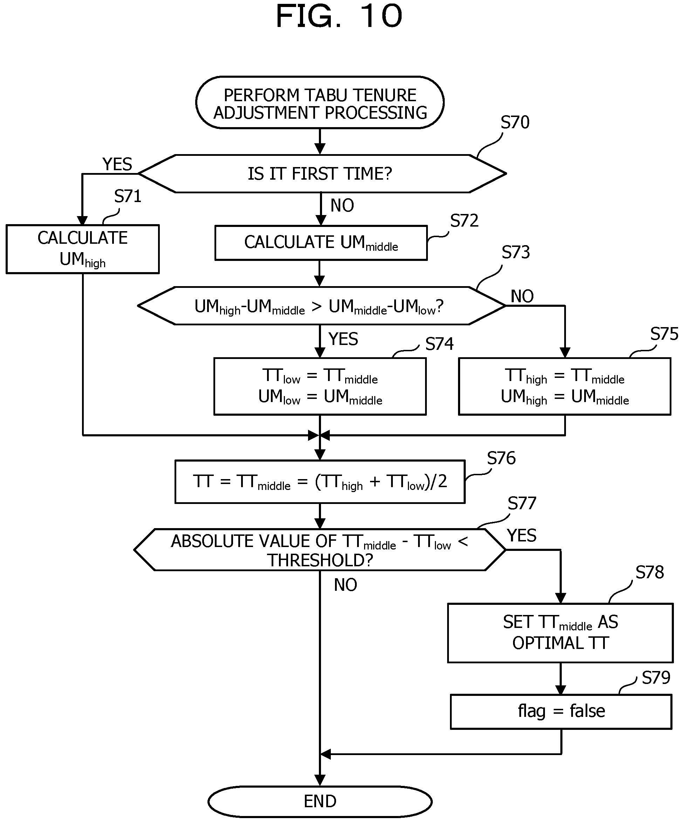

FIG. 10 is a flowchart illustrating a processing procedure of the tabu tenure adjustment processing in the second example.

Step S70: The tabu tenure adjustment unit 37 determines whether it is the first tabu tenure adjustment processing. When it is determined that it is the first tabu tenure adjustment processing, the tabu tenure adjustment unit 37 performs the processing of step S71. When it is determined that it is not the first tabu tenure adjustment processing, the tabu tenure adjustment unit 37 performs the processing of step S72.

Step S71: The tabu tenure adjustment unit 37 calculates $UM_{high}$ by aggregating $FC_i$. $UM_{high}$ is UM when the tabu tenure (TT) is $T_{high}$. After that, the processing of step S76 is performed.

Step S72: The tabu tenure adjustment unit 37 calculates $UM_{middle}$ by aggregating $FC_i$. $UM_{middle}$ is UM when TT is $T_{middle}$. $T_{middle}$ is an intermediate value of the range of tabu tenure represented by $TT_{low}$ and $TT_{high}$, and may be represented as $(TT_{high} + TT_{low})/2$.

Step S73: The tabu tenure adjustment unit 37 calculates the slope of the change in UM in a first range of $TT_{low}$ to $TT_{middle}$ by $UM_{middle} - UM_{low}$, and calculates the slope of the change in UM in a second range of $TT_{middle}$ to $TT_{high}$ by $UM_{high} - UM_{middle}$. The tabu tenure adjustment unit 37 determines whether it is $UM_{high} - UM_{middle} > UM_{middle} - UM_{low}$. When it is $UM_{high} - UM_{middle} > UM_{middle} - UM_{low}$, it indicates that the slope of the change in UM in the second range is larger than the slope of the change in UM in the first range. When it is determined that it is $UM_{high} - UM_{middle} > UM_{middle} - UM_{low}$, the tabu tenure adjustment unit 37 performs the processing of step S74. When it is determined that it is not $UM_{high} - UM_{middle} > UM_{middle} - UM_{low}$, the tabu tenure adjustment unit 37 performs the processing of step S75.

Step S74: The tabu tenure adjustment unit 37 sets $TT_{low}$ as $TT_{middle}$ and sets $UM_{low}$ as $UM_{middle}$. After that, the processing of step S76 is performed.

Step S75: The tabu tenure adjustment unit 37 sets $TT_{high}$ as $TT_{middle}$ and sets $UM_{high}$ as $UM_{middle}$. After that, the processing of step S76 is performed.

Step S76: The tabu tenure adjustment unit 37 sets $(TT_{high} + TT_{low})/2$ as TT and $TT_{middle}$ to be used for tabu search.

Step S77: The tabu tenure adjustment unit 37 determines whether it is absolute value of $TT_{middle}$ - $TT_{low}$ < threshold. When it is determined that it is absolute value of $TT_{middle}$ - $TT_{low}$ < threshold, the tabu tenure adjustment unit 37 performs the processing of step S78. When it is determined that it is not absolute value of $TT_{middle}$ - $TT_{low}$ < threshold, the tabu tenure adjustment unit 37 ends one time of adjustment processing of tabu tenure. As the threshold, an appropriate value is used according to the calculation time, desired accuracy, or the like. With a smaller threshold, TT in which the slope of UM is maximized may be searched for with higher accuracy.

Step S78: The tabu tenure adjustment unit 37 sets $TT_{middle}$ as the optimal TT.

Step S79: The tabu tenure adjustment unit 37 sets the flag to "false" indicating that the adjustment of tabu tenure is not executed. Consequently, the adjustment of tabu tenure is completed, and subsequent adjustment of tabu tenure is not performed.

In the above tabu tenure adjustment processing, the range of TT in which the optimal TT is searched for is divided into the two ranges of the first range of $TT_{low}$ to $TT_{middle}$ and the second range of $TT_{middle}$ to $TT_{high}$. With one of the first range and the second range, in which the slope of the change in UM is larger, set as a new range of TT in which the optimal TT is searched for, the processing of dividing into two is repeated. Consequently, the search range for the optimal TT in which the slope of the change in UM is maximized is narrowed. With such processing, useless adjustment processing may be suppressed and an accurate optimal TT may be obtained in a short time.

(Processing Procedure (Third Example))

In the above first and second examples, adjustment of tabu tenure is not performed after the optimal TT is determined once. In a third example of the processing procedure of the data processing device 20 described below, readjustment of tabu tenure may be performed under a predetermined condition even after the optimal TT is determined once.

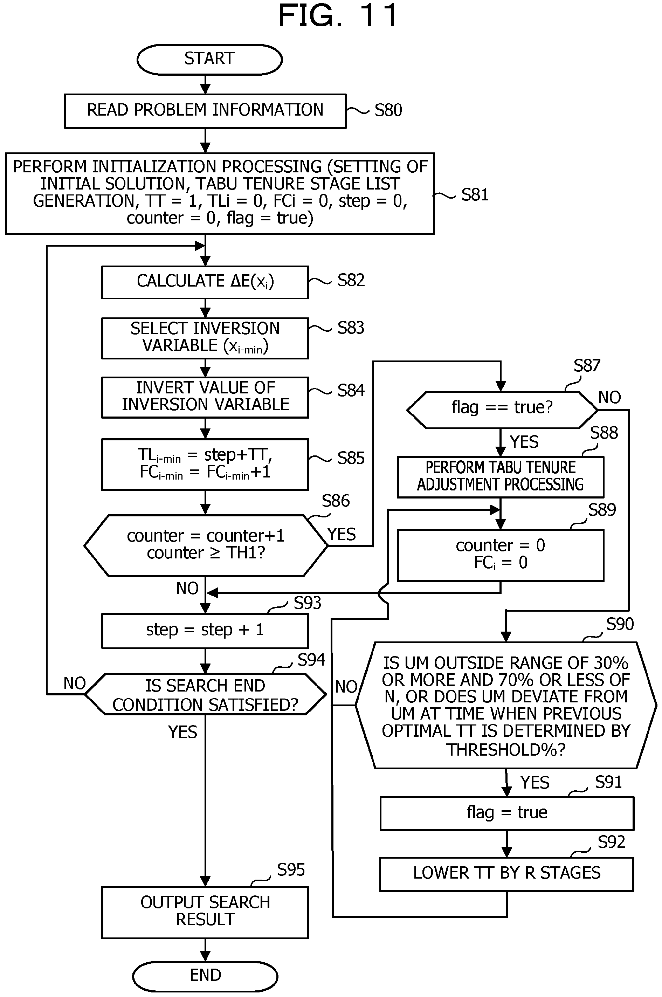

FIG. 11 is a flowchart illustrating the third example of the processing procedure of the data processing device.

Steps S80 to S86 are the same as the processing of steps S10 to S16 illustrated in FIG. 6.

Step S87: The tabu tenure adjustment unit 37 determines whether the flag is "true". When it is determined that the flag is "true", the tabu tenure adjustment unit 37 performs the processing of step S88. When it is determined that the flag is not "true", the tabu tenure adjustment unit 37 performs the processing of step S90 to be described later, unlike the first and second examples.

The processing of steps S88 and S89 is the same as the processing of steps S18 and S19 illustrated in FIG. 6.

Step S90: The tabu tenure adjustment unit 37 determines whether UM is outside the range of 30% or more and 70% or less of the total number of state variables (N), or deviates from UM at the time when the previous optimal TT is determined by a threshold%. An appropriate value is used for the threshold according to the calculation time, desired accuracy, or the like. When the threshold is too small, there is a possibility that the frequency of redetermining the optimal TT may be too high, and when the threshold is too large, there is a possibility that the frequency of redetermining the optimal TT may be too low. Although not particularly limited, for example, a value of about 10 is used as the threshold.

When it is determined that UM is outside the range of 30% or more and 70% or less of N or deviates from UM at the time when the previous optimal TT is determined by the threshold%, the tabu tenure adjustment unit 37 performs the processing of step S91. When it is determined that UM is neither outside the range of 30% or more and 70% or less of N nor deviated from UM at the time when the previous optimal TT is determined by the threshold%, the processing of step S89 is performed.

Step S91: The tabu tenure adjustment unit 37 sets the flag to "true" indicating that the adjustment of tabu tenure is executed. Consequently, adjustment of tabu tenure is resumed. For example, tabu search with TT changed is performed every predetermined period (TH1).

Step S92: The tabu tenure adjustment unit 37 lowers TT from the current stage by R stages in order to redetermine the optimal TT. The value of R is set in advance. Although not particularly limited, a value of about 7 is set as the value of R. After that, the processing of step S89 is performed.

The processing of steps S93 to S95 is the same as the processing of steps S20 to S22 illustrated in FIG. 6.

As described above, in the third example, when it is determined that UM is outside the range of 30% or more and 70% or less of N or deviates from UM at the time when the previous optimal TT is determined by the threshold%, tabu search in which TT is changed every predetermined period (first tabu search) is resumed. Redetermination of the optimal TT is performed. Since there is a possibility that the optimal tabu tenure changes according to a search situation of tabu search, by enabling the optimal TT to be redetermined as described above, appropriate adjustment of tabu tenure according to a search situation is made possible. When redetermination of the optimal TT is performed, the tabu tenure is not returned to the initial value (TT = 1) but is returned by several stages, whereby the period until a new optimal TT is determined may be shortened.

In the above third example, the case where the first example in which the tabu tenure is sequentially lengthened is applied has been described, but the third example may also be applied to the second example. In such case, in the processing of step S92, for example, instead of lowering TT by R stages, the range in which the optimal TT is searched for may be returned to the range several times before.

(Evaluation Experiment Example)

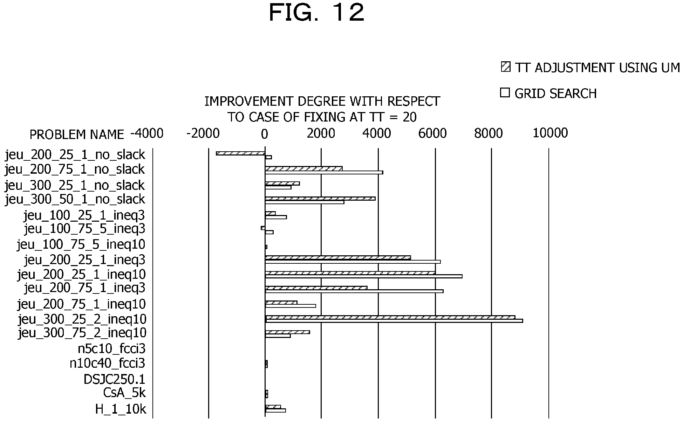

FIG. 12 is a diagram illustrating a result of an evaluation experiment using 18 types of combinatorial optimization problems.

FIG. 12 illustrates an improvement degree of tabu search executed while executing adjustment of TT in the processing procedure of the first example using UM, with respect to tabu search executed by fixing at TT = 20. An improvement degree is represented by the difference between minimum values of energy obtained during searching of the two tabu searches. When the minimum energy obtained by the method of adjusting TT using UM is smaller than the minimum energy obtained by the tabu search executed by fixing at TT = 20, the improvement degree is a positive value. For comparison, FIG. 12 also illustrates an improvement degree in a case of using a method of searching for the optimal TT by repeating tabu search while manually setting tabu tenures of different values in order (grid search).

As illustrated in FIG. 12, with the method of adjusting TT using UM, minimum energy smaller than that obtained by the tabu search executed by fixing at TT = 20 is obtained for most problems. For example, a better solution is obtained compared to the tabu search executed by fixing at TT = 20. With the method of adjusting TT using UM, an improvement degree close to the improvement degree in the case of using grid search was obtained for many problems.

While grid search is a method of determining an appropriate tabu tenure by trial and error and thus there has to be a large number of man-hours, the method of adjusting TT using the UM enables an appropriate TT to be automatically determined in the process of a solution search and thus enables the man-hours for determining TT to be reduced.

As has been described before, the above processing details may be realized by causing the data processing device 20 to execute a program.

The program may be recorded in a computer-readable recording medium (for example, the recording medium 26a). As the recording medium, for example, a magnetic disk, an optical disk, a magneto-optical disk, a semiconductor memory, or the like may be used. The magnetic disk includes an FD and an HDD. The optical disk includes a CD, a CD-recordable (R)/rewritable (RW), a DVD, and a DVD-R/RW. The program may be recorded on a portable type recording medium and distributed. In such case, the program may be copied from the portable type recording medium to another recording medium (for example, the HDD 23) and executed.

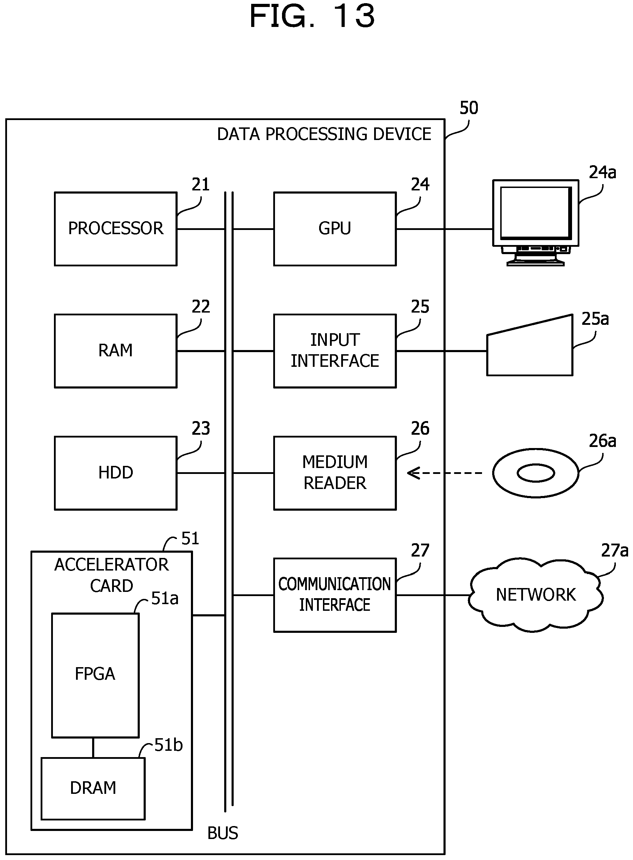

FIG. 13 is a diagram illustrating another example of the data processing device. In FIG. 13, the same elements as the elements illustrated in FIG. 3 are assigned the same reference signs.

A data processing device 50 includes an accelerator card 51 coupled to a bus.

The accelerator card 51 is a hardware accelerator that searches for a solution to a combinatorial optimization problem. The accelerator card 51 includes an FPGA 51a and a dynamic random-access memory (DRAM) 51b.

In the data processing device 50, for example, the processing of the processing unit 12 and the storage unit 11 illustrated in FIG. 1 or each unit illustrated in FIG. 4 is performed by the FPGA 51a and the DRAM 51b. In this case, the processing unit 12 and the storage unit 11 illustrated in FIG. 1 or each unit illustrated in FIG. 4 are realized by various circuits built in the FPGA 51a, a memory in the FPGA 51a, or the DRAM 51b.

A plurality of accelerator cards 51 may be provided.

While an aspect of a program, a data processing device, and a data processing method of the present disclosure has been described above based on the embodiments, these are merely an example, and the present disclosure is not limited to the above description.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A data processing program for causing a computer to execute a process comprising:

    searching for a solution to a combinatorial optimization problem represented by a combination of values of a plurality of state variables by first tabu search in which a tabu tenure in which a value of a state variable whose value has changed is fixed is changed at intervals of a predetermined period;
    storing a number of the state variable whose value has changed in the predetermined period in a storage unit by the tabu tenure;
    determining a first tabu tenure in which a value of the state variable is fixed based on a slope of change in the number with respect to change in the tabu tenure; and
    searching for the solution by second tabu search that uses the determined first tabu tenure.

2. The data processing program according to claim 1, wherein
   the first tabu tenure is the tabu tenure in which the slope is maximum.

3. The data processing program according to claim 1, wherein the computer is caused to execute a process including

    lengthening the tabu tenure at intervals of the predetermined period and calculating a differential of the slope at intervals of the predetermined period, and
    determining the tabu tenure used in the predetermined period of previous time as the first tabu tenure when a value of a differential of the slope changes from positive to negative.

4. The data processing program according to claim 3, wherein the computer is caused to execute a process of determining the tabu tenure used in the predetermined period of previous time as the first tabu tenure when the number of the state variable whose value has changed in the predetermined period exceeds 70% of a total number of the plurality of state variables.

5. The data processing program according to claim 1, wherein the computer is caused to execute a process including

    dividing a range of the tabu tenure in which the first tabu tenure is searched for into two ranges of a first range and a second range, and
    searching for the first tabu tenure by repeating processing of dividing into two with one of the first range and the second range, in which the slope is larger, set as the range that is new.

6. The data processing program according to claim 5, wherein

    the slope of the first range is calculated by a difference between a first number of the state variable whose value has changed in the predetermined period by the first tabu search that uses a lower limit value of the range and a second number of the state variable whose value has changed in the predetermined period by the first tabu search that uses an intermediate value of the range, and
    the slope of the second range is calculated by a difference between the second number and a third number of the state variable whose value has changed in the predetermined period by the first tabu search that uses an upper limit value of the range.

7. The data processing program according to any of the preceding claims, wherein the computer is caused to execute a process of
   after determination of the first tabu tenure, when it is determined that the number of the state variable whose value has changed in the predetermined period is outside a range of 30% or more and 70% or less of a total number of the plurality of state variables or deviates from a value at a time when the first tabu tenure is determined by a threshold%, resuming a search by the first tabu search and redetermining the first tabu tenure.

8. The data processing program according to any of the preceding claims, wherein

a step size by which the tabu tenure is changed increases as the tabu tenure is longer.

9. A data processing device comprising:

a control unit configured to
search for a solution to a combinatorial optimization problem represented by a combination of values of a plurality of state variables by first tabu search in which a tabu tenure in which a value of a state variable whose value has changed is fixed is changed at intervals of a predetermined period,
store a number of the state variable whose value has changed in the predetermined period in a storage unit by the tabu tenure,
determine a first tabu tenure in which a value of the state variable is fixed based on a slope of change in the number with respect to change in the tabu tenure, and
search for the solution by second tabu search that uses the determined first tabu tenure.

10. A data processing method implemented by a computer, the data processing method comprising:

searching for a solution to a combinatorial optimization problem represented by a combination of values of a plurality of state variables by first tabu search in which a tabu tenure in which a value of a state variable whose value has changed is fixed is changed at intervals of a predetermined period;
storing a number of the state variable whose value has changed in the predetermined period in a storage unit by the tabu tenure;
determining a first tabu tenure in which a value of the state variable is fixed based on a slope of change in the number with respect to change in the tabu tenure; and
searching for the solution by second tabu search that uses the determined first tabu tenure.

# FIG. 1

S1
PERFORM SOLUTION SEARCH BY FIRST TABU SEARCH (TABU TENURE IS CHANGED EVERY PREDETERMINED PERIOD)

S2
STORE NUMBER OF TYPES OF STATE VARIABLES WHOSE VALUE HAS CHANGED (UM)

S4
EXECUTE SECOND TABU SEARCH (FIRST TABU TENURE IS APPLIED)

S3
DETERMINE FIRST TABU TENURE

UM

SLOPE

DIFFERENTIAL OF SLOPE

Value

400
300
200
100
0

TABU TENURE

FIRST TABU TENURE

10
DATA PROCESSING DEVICE

12
PROCESSING UNIT

11
STORAGE UNIT

# FIG. 2

# FIG. 3

# FIG. 4

FIG. 5A

| | TABU TENURE |
|---|---|
| 1 | 1 |
| 2 | 2 |
| 3 | 3 |
| 4 | 4 |
| ⋮ | ⋮ |

FIG. 5B

| | TABU TENURE |
|---|---|
| 1 | 1 |
| 2 | 2.1 |
| 3 | 3.3 |
| 4 | 4.6 |
| ⋮ | ⋮ |

# FIG. 6

START

READ PROBLEM INFORMATION — S10

PERFORM INITIALIZATION PROCESSING (SETTING OF INITIAL SOLUTION, TABU TENURE STAGE LIST GENERATION, $TT = 1$, $TL_i = 0$, $FC_i = 0$, step = 0, counter = 0, flag = true) — S11

CALCULATE $\Delta E(x_i)$ — S12

SELECT INVERSION VARIABLE $(x_{i\text{-min}})$ — S13

INVERT VALUE OF INVERSION VARIABLE — S14

$TL_{i\text{-min}} = \text{step}+TT$, $FC_{i\text{-min}} = FC_{i\text{-min}}+1$ — S15

counter = counter+1 counter ≥ TH1? — S16

S17 flag == true?  NO

YES

PERFORM TABU TENURE ADJUSTMENT PROCESSING — S18

counter = 0 $FC_i = 0$ — S19

YES

NO

step = step + 1 — S20

IS SEARCH END CONDITION SATISFIED? — S21

NO

YES

OUTPUT SEARCH RESULT — S22

END

# FIG. 7

PERFORM TABU TENURE
ADJUSTMENT PROCESSING

INCREASE TT BY ONE STAGE — S30

CALCULATE UM — S31

CALCULATE SECOND ORDER
DIFFERENTIAL OF UM — S32

S33

YES

IS IT FIRST TIME?

NO

S34

IS SECOND ORDER DIFFERENTIAL OF UM
INVERTED FROM POSITIVE TO NEGATIVE?

YES

NO

S35

SET PREVIOUS TT AS
OPTIMAL TT

S36

flag = false

END

# FIG. 8

PERFORM TABU TENURE
ADJUSTMENT PROCESSING

INCREASE TT BY ONE STAGE — S40

CALCULATE UM — S41

CALCULATE SECOND ORDER
DIFFERENTIAL OF UM — S42

IS IT FIRST TIME? — S43 → YES

NO

IS SECOND ORDER DIFFERENTIAL OF UM
INVERTED FROM POSITIVE TO NEGATIVE,
AND IS UM 30% OR MORE AND 70% OR LESS
OF N? — S44 → YES

NO

DOES UM EXCEED 70% OF N? — S45 → YES

NO

SET PREVIOUS TT AS
OPTIMAL TT — S46

flag = false — S47

END

# FIG. 9

START

READ PROBLEM INFORMATION — S50

PERFORM INITIALIZATION PROCESSING
(SETTING OF INITIAL SOLUTION, $TT = TT_{high} = TT_{init}$,
$TT_{low} = 0$, $UM_{low} = 0$, $TL_i = 0$, $FC_i = 0$, step = 0,
counter = 0, flag = true) — S51

CALCULATE $\Delta E(x_i)$ — S52

SELECT INVERSION
VARIABLE ($x_{i-min}$) — S53

INVERT VALUE OF
INVERSION VARIABLE — S54

$TL_{i-min} = step+TT$,
$FC_{i-min} = FC_{i-min}+1$ — S55

counter = counter+1
counter ≥ TH1? — S56

YES

S57
flag == true? — NO

YES — S58
PERFORM TABU TENURE
ADJUSTMENT
PROCESSING

S59
counter = 0
$FC_i = 0$

NO

step = step + 1 — S60

IS SEARCH END
CONDITION SATISFIED? — S61

NO

YES

OUTPUT SEARCH RESULT — S62

END

# FIG. 10

PERFORM TABU TENURE
ADJUSTMENT PROCESSING

S70

YES — IS IT FIRST TIME?

NO

S71

CALCULATE
$UM_{high}$

S72

CALCULATE $UM_{middle}$

S73

$UM_{high} - UM_{middle} > UM_{middle} - UM_{low}$? — NO

YES

S74

$TT_{low} = TT_{middle}$
$UM_{low} = UM_{middle}$

S75

$TT_{high} = TT_{middle}$
$UM_{high} = UM_{middle}$

S76

$TT = TT_{middle} = (TT_{high} + TT_{low})/2$

S77

ABSOLUTE VALUE OF $TT_{middle} - TT_{low} <$
THRESHOLD? — YES

NO

S78

SET $TT_{middle}$ AS
OPTIMAL TT

S79

flag = false

END

# FIG. 11

START

READ PROBLEM INFORMATION — S80

PERFORM INITIALIZATION PROCESSING (SETTING OF INITIAL SOLUTION, TABU TENURE STAGE LIST GENERATION, TT = 1, TLi = 0, FCi = 0, step = 0, counter = 0, flag = true) — S81

CALCULATE $\Delta E(x_i)$ — S82

SELECT INVERSION VARIABLE ($x_{i\text{-}min}$) — S83

INVERT VALUE OF INVERSION VARIABLE — S84

$TL_{i\text{-}min}$ = step+TT, $FC_{i\text{-}min}$ = $FC_{i\text{-}min}$+1 — S85

S86
counter = counter+1
counter ≥ TH1? — YES

NO

flag == true? — S87 — NO

YES

PERFORM TABU TENURE ADJUSTMENT PROCESSING — S88

counter = 0
$FC_i$ = 0 — S89

S93
step = step + 1

S94
IS SEARCH END CONDITION SATISFIED? — NO

YES

NO

S90
IS UM OUTSIDE RANGE OF 30% OR MORE AND 70% OR LESS OF N, OR DOES UM DEVIATE FROM UM AT TIME WHEN PREVIOUS OPTIMAL TT IS DETERMINED BY THRESHOLD%?

YES — S91
flag = true

S92
LOWER TT BY R STAGES

S95
OUTPUT SEARCH RESULT

END

# FIG. 12

☑ TT ADJUSTMENT USING UM

☐ GRID SEARCH

IMPROVEMENT DEGREE WITH RESPECT
TO CASE OF FIXING AT TT = 20

| PROBLEM NAME | -4000 | -2000 | 0 | 2000 | 4000 | 6000 | 8000 | 10000 |
|---|---|---|---|---|---|---|---|---|
| jeu_200_25_1_no_slack | | | | | | | | |
| jeu_200_75_1_no_slack | | | | | | | | |
| jeu_300_25_1_no_slack | | | | | | | | |
| jeu_300_50_1_no_slack | | | | | | | | |
| jeu_100_25_1_ineq3 | | | | | | | | |
| jeu_100_75_5_ineq3 | | | | | | | | |
| jeu_100_75_5_ineq10 | | | | | | | | |
| jeu_200_25_1_ineq3 | | | | | | | | |
| jeu_200_25_1_ineq10 | | | | | | | | |
| jeu_200_75_1_ineq3 | | | | | | | | |
| jeu_200_75_1_ineq10 | | | | | | | | |
| jeu_300_25_2_ineq10 | | | | | | | | |
| jeu_300_75_2_ineq10 | | | | | | | | |
| n5c10_fcci3 | | | | | | | | |
| n10c40_fcci3 | | | | | | | | |
| DSJC250.1 | | | | | | | | |
| CsA_5k | | | | | | | | |
| H_1_10k | | | | | | | | |

# FIG. 13

DATA PROCESSING DEVICE 50

PROCESSOR 21

RAM 22

HDD 23

ACCELERATOR CARD 51

FPGA 51a

DRAM 51b

BUS

GPU 24

INPUT INTERFACE 25

MEDIUM READER 26

COMMUNICATION INTERFACE 27

24a

25a

26a

NETWORK 27a

Europäisches
Patentamt

European
Patent Office

Office européen
des brevets

# EUROPEAN SEARCH REPORT

**Application Number**

EP 25 15 4368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANSÓTEGUI CARLOS ET AL: "Hyper-Reactive Tabu Search for MaxSAT", 31 December 2018 (2018-12-31), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 309 - 325, XP047498627, ISBN: 978-3-319-10403-4 [retrieved on 2018-12-31] * Sec. 5, "Numerical results" * * sec. 3.1 "Length of tabu lists"; page 3, paragraph 1 - paragraph 2 * * section 3.3; page 7, line 2 * * section 3.3 * | 1-10 | INV. G06F17/11 G06N5/01 G06Q10/04 |
|  | ----- |  | |
|  |  |  | **TECHNICAL FIELDS SEARCHED (IPC)** |
|  |  |  | G06F G06N G06Q |

The present search report has been drawn up for all claims

| Place of search | Date of completion of the search | Examiner |
|---|---|---|
| The Hague | 30 June 2025 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**Patent documents cited in the description**

- WO 2006118193 A
- US 20230169353
- US 20160042294

**Non-patent literature cited in the description**

- **NILGUN FESCIOGLU-UNVER ; MIECZYSLAW M. KOKAR**. Self Controlling Tabu Search algorithm for the Quadratic Assignment Problem. *Computers & Industrial Engineering*, 2011, vol. 60, 310-319
- **ROBERTO BATTITI ; GIAMPIETRO TECCHIOLLI**. The Reactive Tabu Search. *ORSA Journal on Computing*, 1994, vol. 6 (2), 126-140
- **E. TAILLARD**. Robust taboo search for the quadratic assignment problem. *Parallel computing*, 1991, vol. 17, 443-455